# EUROPÄISCHE PATENTANMELDUNG

(11) **EP 3 560 656 A1**
(43) Veröffentlichungstag der Anmeldung: **30.10.2019**
(21) Anmeldenummer: 18169276.5
(22) Anmeldetag: 25.04.2018
(51) Int. Cl.: B23Q 17/24, A61C 1/00, B23Q 3/155

(54) **SYSTEM ZUR STEUERUNG EINER WERKZEUGMASCHINE**

(71) Anmelder: Huber, Martin, 5452 Pfarrwerfen (AT); Wörmer, Alfons, 5500 Bischofshofen (AT)
(72) Erfinder: SEILER, Christian, 8052 Zürich (CH); SCHOTTENHAML, Raphael, 8400 Winterthur (CH); ROHNER, Gottfried, 9450 Altstätten (CH); HUBER, Martin, 5452 Pfarrwerfen (AT)
(74) Vertreter: Baronetzky, Klaus

(57) **Zusammenfassung**

Die Erfindung betrifft ein System aus einem Verfahren zur Steuerung einer Werkzeugmaschine mit mindestens einem wechselbaren Werkzeug und einem Werkstück, insbesondere einem Fräsrohling, und einem Verfahren zur Bearbeitung dieses Werkstücks, welche Werkzeugmaschine einen in mindestens 2, insbesondere mindestens 3 Raumachsen in einem Bewegungsbereich beweglichen Roboterarm aufweist, der mindestens ein Werkstück, ggf. über einen Werkstückhalter, trägt, führt und bewegt, mit einer Steuereinheit für die Steuerung der Werkzeugmaschine.

Die Werkzeugmaschine (52) weist einen Sensor (46), insbesondere einen raumfesten optischen Sensor, auf bzw. dieser ist ihr zugeordnet, und dessen Erfassungsbereich (42) überlappt sich mit dem Bewegungsbereich mindestens teilweise. Die Stirnseite (34) eines Schafts (22) des mindestens einen wechselbaren Werkzeugs (10) ist mit einem Code (36) versehen. Das wechselbare Werkzeug (10) wird vom Roboterarm (44) in dem Erfassungsbereich (42) bewegt und bei Erfassung des Codes (36) durch den Sensor (46) wird der Code (36) der Steuereinheit (54) zur Identifizierung des Werkzeugs (10) zugeleitet. Die Steuereinheit (54) nimmt daraufhin eine Identifikation des Werkzeugs (10) für die Steuerung der Werkzeugmaschine (52) zur an die Identität des Werkzeugs (10) angepassten Bearbeitung vor.

## Beschreibung

Die Erfindung betrifft ein System aus einem Verfahren zur Steuerung einer Werkzeugmaschine und mindestens einem wechselbaren Werkzeug, und dem Verfahren zur Bearbeitung eines Werkstücks, gemäß dem Oberbegriff des Anspruchs 1.

Ein derartiges System lässt sich beispielsweise der US 2007/111,640 A1 entnehmen. Die dortige Fräsmaschine weist eine Kamera auf, die ortsfest angebracht ist. Sie ist oberhalb eines Werkzeugs angeordnet und weist einen Erfassungsbereich auf, der auf ein Werkzeug gerichtet ist. Die Kamera soll den Zustand der Spitze des Werkzeugs erfassen.

Werkzeugmaschinen, insbesondere Fräsmaschinen, aber auch Dreh-Fräsmaschinen, Schleifmaschinen und Bohrmaschinen für die Dentalindustrie müssen in der Lage sein, unterschiedliche Werkzeuge zu handhaben. Für die Bearbeitung der Werkstücke mit den unterschiedlichen Werkzeugen werden, entsprechend den spezifischen Eigenschaften der Werkzeuge, wie beispielsweise die Korngröße eines Fräsers, teils unterschiedliche Programme verwendet, die an die Spezifika der unterschiedlichen Werkzeugeigenschaften angepasst sind.

Es ist möglich, die verschiedenen Werkzeugarten wie beispielsweise Fräser, Bohrer oder ähnliches mithilfe einer Kamera grob zu unterscheiden, z. B. Anhand ihrer Konturen. Ein Fräser hat selbstverständlich eine andere Außenkontur als beispielsweise ein Bohrer. Jedoch ist die automatische Erkennung, um welche Werkzeuggröße, wie z. B. der Durchmesser eines Bohrers oder die Korngröße eines Fräsers, nicht ohne Weiteres und vor allem zuverlässig möglich.

Daher liegt der Erfindung die Aufgabe zugrunde, ein System aus einem Verfahren zur Steuerung einer Werkzeugmaschine und mindestens einem wechselbaren Werkzeug und dem Verfahren zur Bearbeitung eines Werkstücks gemäß dem Oberbegriff des Anspruchs 1 zu schaffen, das hinsichtlich der Nachteile des Standes der Technik weiter verbessert ist.

Diese Aufgabe wird erfindungsgemäß durch Anspruch 1 gelöst. Vorteilhafte Weiterbildungen ergeben sich aus den Unteransprüchen.

Die erfindungsgemäße Lösung gemäß Anspruch 1 zeichnet sich zunächst dadurch aus, dass ein Sensor, insbesondere ein raumfester optischer Sensor, einen Erfassungsbereich aufweist, der sich mit dem Bewegungsbereich eines Roboterarmes, der in mehreren Raumachsen beweglich ist, überlappt. Der Roboterarm, der der Bearbeitung eines Werkstückes bzw.

Rohlings dient, wird erfindungsgemäß durch einen geeigneten Aufsatz auch zum automatischen Werkzeugwechsel benutzt.

Hierzu weisen die wechselbaren Werkzeuge entsprechende Aufnahmevorrichtungen auf, die mit dem entsprechenden Aufsatz an dem Roboterarm korrespondieren. Der Roboterarm kann somit programmgesteuert ein Werkzeug aus einem in der Werkzeugmaschine vorgehaltenen Werkzeugmagazin entnehmen und dieses Werkzeug in eine Spindel, die mit einer entsprechenden Spannvorrichtung ausgestattet ist, einführen.

Befindet sich bereits ein anderes Werkzeug in der Spindel, wird die Spannvorrichtung zuerst gelöst, so dass das noch in der Spindel vorhandene Werkzeug entnommen werden kann. Nachdem dieses Werkzeug in das Werkzeugmagazin überführt worden ist, kann ein anderes Werkzeug in die Spannvorrichtung der Spindel gebracht und dort eingespannt werden.

Besonders bevorzugt im Sinne der vorliegenden Erfindung ist es, wenn die Aufnahmevorrichtung an dem Roboterarm geeignet ist, zwei Werkzeuge gleichzeitig aufzunehmen. Dadurch wird es möglich, dass das Werkzeug, das als nächstes zur Bearbeitung des Werkstücks oder Rohlings benötigt wird, bereits aus dem Werkzeugmagazin entnommen werden kann, obwohl sich noch ein anderes Werkzeug in der Spannvorrichtung der Spindel befindet. Der Werkzeugwechsel kann dann derart erfolgen, dass der Roboterarm mit der Aufnahmevorrichtung mit dem als nächstes benötigten Werkzeug zur Spannvorrichtung der Spindel fährt, das noch in die Spindel eingespannte Werkzeug - selbstverständlich nach Lösen der Spannvorrichtung - mit einer ersten Aufnahme der Aufnahmevorrichtung entnimmt, sodann die zweite Aufnahme der Aufnahmevorrichtung vor der Spindel positioniert und das als nächstes benötigte Werkzeug in die Spannvorrichtung einführt, so dass diese das Werkzeug für die weitere Bearbeitung des Werkstückes bzw. Rohlings einspannen kann.

Durch die doppelt vorhandenen Aufnahmen der Aufnahmevorrichtung ist es möglich, eine Wegeoptimierung des Roboterarms zu realisieren, da der Roboterarm zum Wechseln der Werkzeuge nur einmal vom Werkzeugmagazin zur Spindel und ggf. danach von der Spindel wieder zum Werkzeugmagazin bewegt werden muss. Es versteht sich, dass das aus der Spindel entnommene Werkzeug natürlich auch in der einen Aufnahme der Aufnahmevorrichtung verbleiben kann, wenn ein weiterer Werkzeugwechsel für die vollständige Bearbeitung des Werkstückes bzw. Rohlings nicht nötig ist.

Erfindungsgemäß wird nun während des Bewegens des Roboterarmes das als nächstes benötigte Werkzeug in den Erfassungsbereich des erfindungsgemäßen Sensors gebracht, so dass der Sensor einen auf dem Werkzeug befindlichen Code erfassen kann. Dieser Code befindet sich erfindungsgemäß auf der Stirnfläche des Schaftes des Werkzeuges, also einem Bearbeitungsabschnitt des Werkzeuges gegenüberliegend.

Die Anbringung des Codes auf der Stirnfläche des Werkzeugschaftes hat gegenüber der Anbringung eines Codes, beispielsweise eines Barcodes, auf der Mantelfläche des Werkzeugschaftes den Vorteil, dass die Stirnfläche im Wesentlichen frei von Verschleiß- oder Abrieberscheinungen ist. Die Mantelfläche des Werkzeugschaftes dient einerseits dem sicheren Einspannen des Werkzeuges in der Spannvorrichtung der Spindel der Werkzeugmaschine und andererseits auch der Lagerung des Werkzeugs im Werkzeugmagazin. Die Stirnfläche hingegen wird weder beim Spannen der Backen in der Spannvorrichtung noch durch das Einführen oder Entnehmen des Werkzeugs bei der Lagerung im Werkzeugmagazin tangiert - ein Zerkratzen oder sonstiges Beeinträchtigen der den Code tragenden Oberfläche ist dadurch im Prinzip ausgeschlossen.

Zudem bleibt die Oberfläche der Mantelfläche, welche erfindungsgemäß frei von einem Code bleibt, glatt, wodurch auch die Rundlaufeigenschaften des Werkzeuges verbessert sind verglichen mit einer Mantelfläche, welche z.B. durch Farbauftrag (Druck) oder Materialabtragung (z.B. durch Ätzen oder Lasern eines Codes) eine ungleichmäßigere Oberflächenbeschaffenheit aufweist.

Für die erfindungsgemäße Aufbringung des Codes auf der Stirnfläche des Werkzeugschaftes ist es vorteilhaft, die Oberfläche der Stirnseite vorzubehandeln, damit der beispielsweise durch Lasergravur aufzubringende Code durch den Sensor besser lesbar ist. Hierzu hat es sich als vorteilhaft herausgestellt, die Oberfläche der Stirnfläche durch eine Laserbehandlung zu glätten, um etwaige nach der Maschinenbearbeitung des Werkzeugschaftes vorhandene Rillen oder jede andere Form von Oberflächenrauigkeit einzuebnen und auf ein Maß zu reduzieren, welches die Lesbarkeit des Codes nicht mehr negativ beeinflusst. Eine Möglichkeit dieser Oberflächenbehandlung ist das so genannte "Abzeilen" der Oberfläche mit einem Laserwerkzeug, wodurch eine feiner strukturierte und insofern "mattierte" Oberfläche erzeugt werden kann. Hierdurch ist nach dieser Oberflächenbehandlung kein Schleifbild auf der Oberfläche der Stirnseite mehr zu erkennen, der Kontrast und damit die Auslesbarkeit des beispielsweise durch Lasergravur aufzubringenden Codes wird dadurch signifikant verbessert.

Zum sicheren Auslesen des Codes auf der Stirnseite des Werkzeugschaftes ist es überdies wichtig, den Code, der sich erfindungsgemäß rechteckförmig oder quadratisch auf der Stirnseite des Werkzeugschaftes erstreckt, exakt zentriert, bezogen auf die Rotationsachse des Werkzeuges, anzubringen. Darüber hinaus ist es ebenfalls wichtig, so genannte Ruhezonen um das von dem Code gebildete Rechteck oder Quadrat zu belassen, die frei von einem Code oder jeder anderen Form von Kennzeichnung bleiben. Eine sichere Erfassung des Codes ist nur mit entsprechend ausreichend breiten Ruhezonen möglich, welche - bei einer erfindungsgemäß bevorzugten quadratischen Erstreckung des insofern zweidimensionalen Codes - zu allen vier Seiten des 2D-Codes, also ober- und unterhalb sowie links und rechts der quadratischen Fläche, gleich breit sein sollen. Auch muss an den Ecken des 2D-Codes ein ausreichend großer Mindestabstand zu dem kreisförmigen Rand der Stirnfläche gewährleistet sein, um den Code zuverlässig auslesen zu können.

Der Werkzeugschaft, der im Wesentlichen eine zylindrische Form aufweist, besitzt an seinem stirnseitigen Ende einen konusförmige Abschnitt, welcher das Einführen des Werkzeuges in die Spannvorrichtung der Spindel wie auch in die Halterungen des Werkzeugmagazines erleichtern soll. Insofern wird dieser konusförmige Abschnitt des Werkzeugschaftes auch als Einführschräge bezeichnet. Es versteht sich, dass bei vorgegebenem Durchmesser des zylindrischen Abschnittes der für den Code nutzbare Flächeninhalt der Stirnfläche des Werkzeugschaftes sowohl von dem Konuswinkel als auch von der Länge des konusförmigen Abschnittes abhängt. Sollte sich die für die Anbringung des Codes unter Berücksichtigung der Ruhezonen bzw. Mindestabstände zum Rand der Stirnfläche zur Verfügung stehende Fläche als zu klein erweisen, so ist durch eine Verkleinerung des Konuswinkels bzw. Verkürzung des konusförmigen Abschnittes des Werkzeugschaftes in gewissen Grenzen eine Vergrößerung der Stirnfläche möglich.

Als zweidimensionaler Code hat sich der so genannte Data-Matrix-Code als besonders geeignet erwiesen. Es versteht sich jedoch, dass auch jeder andere zweidimensionale Code verwendet werden kann, ohne den Bereich der vorliegenden Anmeldung zu erfassen. Auch eindimensionale Codes wie beispielsweise Streifencodes können Verwendung finden, wobei es sich versteht, dass die Informationsdichte eines 2D-Codes der eines eindimensionalen überlegen ist.

Erfindungsgemäß wird der von dem, bevorzugt als Kamera ausgebildete, Sensor erfasste Code einer Steuervorrichtung der Dentalwerkzeugmaschine zugeleitet, welche basierend auf dem erfassten Code des Werkzeuges ein entsprechend zugeordnetes bzw. geeignetes Steuerprogramm ausführt oder die Steuerung der Bearbeitung des Werkstückes oder Rohlings an die spezifischen Werkzeugeigenschaften anpasst. Damit ist eine deutlich verbesserte Oberflächengüte des fertigen Endproduktes auf der einen Seite und eine wege- und zeitoptimierte Fertigung auf der anderen Seite und damit eine kürzere Bearbeitungsdauer für das zu erstellende Dentalprodukt erreichbar.

Die Erfindung ist besonders geeignet für Dentalfräsmaschinen, insbesondere solche, die eine Achsenverteilung von 5/0 haben, also eine starre Frässpindel und einen in 5 Achsen beweglichen Roboterarm.

Gemäß einer vorteilhaften Weiterbildung ist es vorgesehen, dass das Werkzeug an einem Greifer oder einer Aufnahme des Roboterarms gelagert ist und sich insbesondere die Stirnseite des Werkzeugschafts im Erfassungsbereich des Sensors erstreckt.

Gemäß einer vorteilhaften Weiterbildung ist es vorgesehen, dass der Werkzeugschaft an seinem einem Arbeitsbereich des Werkzeugs abgewandten Ende sich zu der Stirnseite hin konusförmig verjüngt in der Art, dass der konusförmige Abschnitt des Werkzeugschafts eine Einführschräge bildet, die das Einführen des Werkzeugs in ein Spannfutter einer Werkzeugspindel der Werkzeugmaschine erleichtert.

Gemäß einer vorteilhaften Weiterbildung ist es vorgesehen, dass der Konuswinkel zwischen 10° und 30°, insbesondere zwischen 15° und 25°, bezogen auf die Rotationsachse des Werkzeugschafts, beträgt.

Gemäß einer vorteilhaften Weiterbildung ist es vorgesehen, dass die Länge des konusförmigen Abschnitts des Werkzeugschafts zwischen 5% und 20%, insbesondere zwischen 7% und 15% der Gesamtlänge des Werkzeugschafts, also einschließlich des konusförmigen Abschnitts, eträgt.

Gemäß einer vorteilhaften Weiterbildung ist es vorgesehen, dass der Flächeninhalt der Stirnseite zwischen 50% und 70 % der Querschnittsfläche des zylindrischen Abschnitts des Werkzeugschafts , bevorzugt mindestens 60% der Querschnittsfläche des zylindrischen Abschnitts des Werkzeugschafts beträgt.

Gemäß einer vorteilhaften Weiterbildung ist es vorgesehen, dass die Stirnseite des Werkzeugschafts eine durch eine zeilenweise Oberflächenbehandlung, insbesondere durch eine Behandlung mit einem Laserwerkzeug, erzeugte Oberfläche aufweist.

Gemäß einer vorteilhaften Weiterbildung ist es vorgesehen, dass die Stirnseite des Werkzeugschafts kreisförmig ausgebildet ist und der Code auf der Stirnseite des Werkzeugschafts eine rechteckförmige Fläche einnimmt und/oder, dass der Code ein monochromer Code, insbesondere ein Data Matrix Code ist.

Gemäß einer vorteilhaften Weiterbildung ist es vorgesehen, dass der Code zentriert auf der Stirnseite des Werkzeugschaft angebracht ist.

Gemäß einer vorteilhaften Weiterbildung ist es vorgesehen, dass zwischen dem kreisförmigen Rand der Stirnseite des Werkzeugschafts und den Außenecken der rechteckfömigen Fläche, welche der Code auf der Stirnseite des Werkzeugschafts einnimmt, in radialer Richtung in Bezug auf Rotationsachse des Werkzeugschafts zu allen Seiten ein gleichmäßiger Abstand besteht, der mehr als 3% des Radius der Stirnseite des Werkzeugschafts, insbesondere mindestens 5%, beträgt.

Gemäß einer vorteilhaften Weiterbildung ist es vorgesehen, dass die den rechteckförmigen Code umgebenden freibleibenden Flächenabschnitte auf der Stirnseite des Werkzeugschafts unbenutzt bleiben hinsichtlich der Aufbringung weiterer Codes bzw. Informationen.

Gemäß einer vorteilhaften Weiterbildung ist es vorgesehen, dass der Code durch eine Bearbeitung mit einem Laserwerkzeug auf der Stirnseite des Werkzeugschafts, insbesondere durch Lasergravur, aufgebracht ist.

Gemäß einer vorteilhaften Weiterbildung ist es vorgesehen, dass in den Code eine das Werkzeug eindeutig identifizierende ID integriert ist und/oder dass in den Code (36) eine die Charge des Werkzeugs eindeutig identifizierende ID integriert ist.

Gemäß einer vorteilhaften Weiterbildung ist es vorgesehen, dass in den Code eine den Typ des Werkzeugs, wie beispielsweise die Korngröße eines Fräsers, eindeutig identifizierende ID integriert ist.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: eine Seitenansicht eines Werkzeugs und einem Streifencode zu Erläuterungszwecken;
- Fig. 2: eine perspektivische Ansicht eines erfindungsgemäßen Werkzeugs;
- Fig. 3: eine vergrößerte Darstellung eines Details aus Fig. 2;
- Fig. 4: eine perspektivische Ansicht eines erfindungsgemäßen Systems.

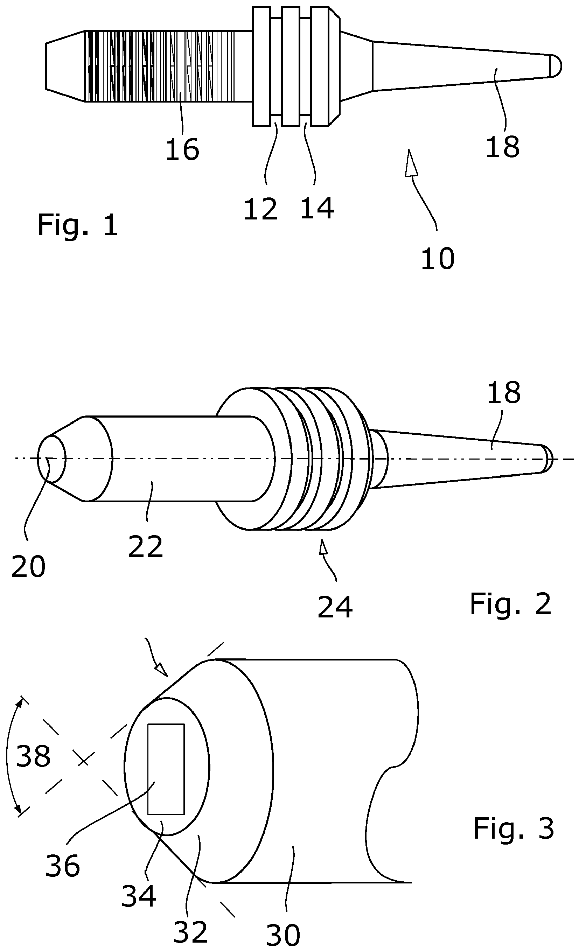

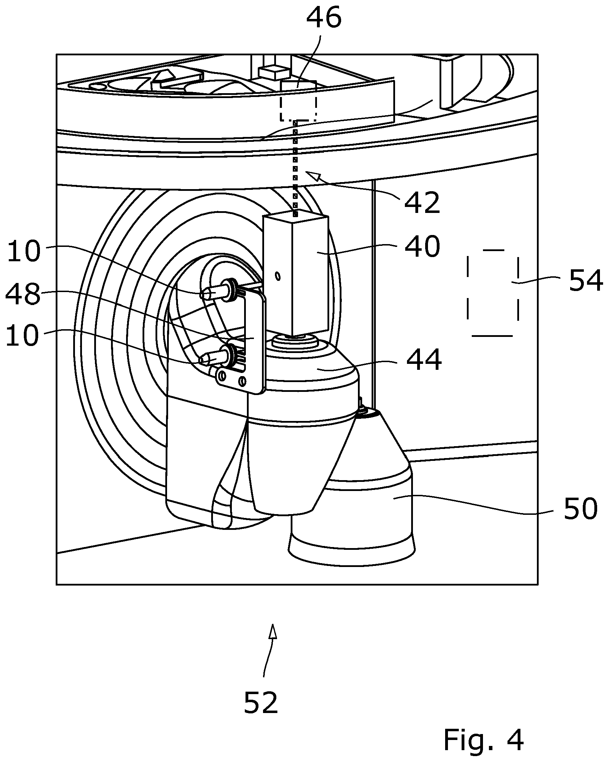

Das in Fig. 1 dargestellte Werkzeug 10 weist einen Arbeitsbereich 18 auf, der beispielsweise diamantbestückt sein kann. Am gegenüberliegenden Ende ist ein Schaft 22 des Werkzeugs 10 vorgesehen. Dazwischen trägt das Werkzeug 10 einen Ring 24, der aus Fig. 2 ersichtlich ist, mit zwei einander benachbarten Ringnuten 12 und 14. Diese sind dafür bestimmt, an einer Aufnahme des Roboterarms 44, der in Fig. 4 ersichtlich ist, oder einem entsprechenden Greifer gehalten zu werden. Aus Fig. 4 ist ebenfalls ersichtlich, dass in dieser Position der Schaft 22 des Werkzeugs 10 freiliegt.

Der Schaft 22 ist gemäß Fig. 3 mit einem Code 36 versehen, bevorzugt einem Data-Matrix-Code, der sich als zweidimensionaler Code rechteckförmig oder quadratisch auf der Stirnfläche 34 des Werkzeugschaftes 22 erstreckt. Der im Wesentlichen zylindrische Schaft 22 des Werkzeuges 10 geht, ausgehend von Ring 24, von dem zylindrischen Abschnitt 30, der den überwiegenden Teil der Länge des Werkzeugschaftes 22 ausmacht, in den konusförmigen Abschnitt 32 über, der insofern die Einführschräge bildet.

In Fig. 1 ist - lediglich zu Erläuterungszwecken - ein (eindimensionaler) Streifencode 16 angedeutet. Bei der Aufbringung eines solchen Codes auf der Mantelfäche, also dem zylindrischen Abschnitt 30 des Werkzeugschaftes 22, können jedoch durch Abrieb oder Druckmarken vom Spannfutter der Spindel 50, die in Fig. 4 zu erkennen ist, Beschädigungen des Codes auftreten, welche ein sicheres Auslesen des Codes beeinträchtigen. Eine solche Lösung ist daher mit Nachteilen behaftet.

Stirnseitig und damit am Ende des konusförmigen Abschnittes 32 erstreckt sich die kreisförmige Stirnseite 34, die stattdessen erfindungsgemäß den Code 36 trägt, der das Werkzeug 10 eindeutig identifiziert. Um den Code 36 herum erstrecken sich Bereiche, welche keinerlei Kennzeichnung tragen und die als so genannte Ruhezonen bezeichnet werden.

Der rechteckförmige oder quadratische Code 36 ist, bezogen auf die Rotationsachse 20, die in Fig. 2 dargestellt ist, extakt zentriert aufgebracht. Damit sowie mit den sich gleichmäßig um die vom Code 36 eingenommene Fläche erstreckenden von jeder Kennzeichnung freien Ruhezonen wird ein sicheres Auslesen des Codes 36 durch den Sensor 46, der in Fig. 4 dargestellt ist, gewährleistet.

Die für die Aufbringung des Codes 36 zur Verfügung stehende Fläche auf der Stirnseite 34 des Werkzeugschaftes 22 kann, wie bereits weiter vorn dargelegt, durch ein Verkürzen des konusförmigen Abschnittes 32 (entlang der Rotationsachse 20 betrachtet) oder auch durch ein Verkleinern des Konuswinkels 38 vergrößert werden, sollte dies erforderlich sein.

Aus Fig. 4 ist eine mögliche grundsätzliche Ausgestaltung einer erfindungsgemäßen Werkzeugmaschine 52 ersichtlich. Der Sensor bzw. die Kamera 46 ist ortsfest oberhalb eines Fräsraums angebracht und von diesem durch eine nicht dargestellte Tür getrennt. Die Türöffnung behindert nicht den Erfassungsbereich 42 (dessen optische Achse in Fig. 4 dargestellt ist) der Kamera 46.

Aus Gründen der besseren Erkennbarkeit ist aus Fig. 4 ersichtlich, wie ein ebenfalls auf der Stirnseite eines zu bearbeitenden Werkstücks 40 vorhandener Code, das von einem Roboterarm 44 gehalten wird, von dem erfindungsgemäßen Sensor 46 erfasst wird. Der Erfassungsbereich bzw. dessen optische Achse 42 ist hier mit der strichpunktierten Linie angedeutet.

Es versteht sich, dass die Erkennung des erfindungsgemäß auf der Stirnseite der beiden in der Fig. 4 zu erkennenden Werkzeuge 10 prinzipiell auf die gleiche Weise geschieht, nämlich indem der Roboterarm 44 um 90° nach rechts gedreht wird und somit die beiden in den beiden Aufnahmen der Aufnahmevorrichtung 48 gehaltenen Werkzeuge 10 nacheinander in den Erfassungsbereich des Sensors oder der Kamera 46 bewegt werden. Bei entsprechender Positionierung kann der Sensor oder die Kamera 46 dann den Code 36 und damit das betreffende Werkzeug 10 erfassen und identifizieren.

Unterhalb des Roboterarms 44 ist eine Werkzeugspindel 50 ersichtlich. Diese ist dafür bestimmt, ein Werkzeug 10 über ein Spannfutter eingespannt zu halten. Hierzu wird über den Roboterarm 44 das Werkzeug 10 mit seinem Schaft 22 in ein an der Spindel 50, in Fig. 4 aus Gründen der Übersichtlichkeit jedoch nicht dargestelltes Spannfutter eingeführt und dort eingespannt. Der Roboterarm 44 weist hierzu zwei Aufnahmen für die Werkzeuge 10 auf. Die Werkzeuge 10 lassen sich dann wahlweise in das Spannfutter der Werkzeugspindel 50 einsetzen, das heißt, ein unmittelbar zu benutzendes Werkzeug 10 wird in das Spannfutter der Spindel 50 eingespannt, während das währeddessen nicht benutzte Werkzeug in einer der beiden Aufnahmen der Aufnahmevorrichtung 48 verbleibt.

Die Aufnahmen der Aufnahmevorrichtung 48 sind im Grunde U-förmig und greifen in die Ringnuten 12 oder 14 ein (vergl. Fig. 2). Durch eine derartige Lagerung liegt der Schaft 22 des betreffenden Werkzeugs 10 je frei. Der Roboterarm 44 ist fünfachsig ausgebildet und vermag die Aufnahmevorrichtung 48 so zu drehen, dass der Schaft 22 in dem Erfassungsbereich 42 liegt. In dieser Position kann der Sensor bzw. die Kamera 46 den dort angebrachten Code lesen und der Steuereinheit 54 zur Identifizierung des Werkzeugs 10 zuleiten.

## Patentansprüche

1. System aus einem Verfahren zur Steuerung einer Werkzeugmaschine mit mindestens einem wechselbaren Werkzeug und einem Werkstück, insbesondere einem Fräsrohling, und dem Verfahren zur Bearbeitung dieses Werkstücks, welche Werkzeugmaschine einen in mindestens 2, insbesondere mindestens 3 Raumachsen in einem Bewegungbereich beweglichen Roboterarm aufweist, der mindestens ein Werkstück, ggf. über einen Werkstückhalter, trägt, führt und bewegt, mit einer Steuereinheit für die Steuerung der Werkzeugmaschine, **dadurch gekennzeichnet, dass**
die Werkzeugmaschine (52) einen Sensor (46), insbesondere einen raumfesten optischen Sensor, aufweist, oder dieser ihr zugeordnet ist, dass dessen Erfassungsbereich (42) sich mit dem Bewegungsbereich mindestens teilweise überlappt,
dass die Stirnseite (34) eines Schafts (22) des mindestens einen wechselbaren Werkzeugs (10) mit einem Code (36) versehen ist,
dass das wechselbare Werkzeug (10) vom Roboterarm (44) in dem Erfassungsbereich (42) bewegt wird, und
dass bei Erfassung des Codes (36) durch den Sensor (46) der Code (36) der Steuereinheit (54) zur Identifizierung des Werkzeugs (10) zugeleitet wird und die Steuereinheit (54) eine Identifikation des Werkzeugs (10) für die Steuerung der Werkzeugmaschine (52) zur an die Identität des Werkzeugs (10) angepassten Bearbeitung vornimmt.

2. System nach Anspruch 1, **dadurch gekennzeichnet, dass** das Werkzeug (10) an einem Greifer oder einer Aufnahme (48) des Roboterarms (44) gelagert ist und sich insbesondere die Stirnseite (34) des Werkzeugschafts (22) im Erfassungsbereich (42) des Sensors (46) erstreckt.

3. System nach einem der vorangegangenen Ansprüche, **dadurch gekennzeichnet, dass** der Werkzeugschaft (22) an seinem einem Arbeitsbereich (18) des Werkzeugs (10) abgewandten Ende sich zu der Stirnseite (34) hin konusförmig verjüngt in der Art, dass der konusförmige Abschnitt (34) des Werkzeugschafts (22) eine Einführschräge bildet, die das Einführen des Werkzeugs (10) in ein Spannfutter einer Werkzeugspindel (50) der Werkzeugmaschine (52) erleichtert.

4. System nach Anspruch 3, **dadurch gekennzeichnet, dass** der Konuswinkel (38) zwischen 10° und 30°, insbesondere zwischen 15° und 25°, bezogen auf die Rotationsachse (20) des Werkzeugschafts (22), beträgt.

5. System nach Anspruch 3 oder 4, **dadurch gekennzeichnet, dass** die Länge des konusförmigen Abschnitts (32) des Werkzeugschafts (22) zwischen 5% und 20%, insbesondere zwischen 7% und 15% der Gesamtlänge des Werkzeugschafts (22), also einschließlich des konusförmigen Abschnitts (32), beträgt.

6. System nach mindestens einem der Ansprüche 3 bis 5, **dadurch gekennzeichnet, dass** der Flächeninhalt der Stirnseite (34) zwischen 50% und 70 % der Querschnittsfläche des zylindrischen Abschnitts (30) des Werkzeugschafts (22), bevorzugt mindestens 60% der Querschnittsfläche des zylindrischen Abschnitts (30) des Werkzeugschafts (22) beträgt.

7. System nach einem der vorangegangenen Ansprüche, **dadurch gekennzeichnet, dass** die Stirnseite (34) des Werkzeugschafts (44) eine durch eine zeilenweise Oberflächenbehandlung, insbesondere durch eine Behandlung mit einem Laserwerkzeug, erzeugte Oberfläche aufweist.

8. System nach einem der vorangegangenen Ansprüche, **dadurch gekennzeichnet, dass** die Stirnseite (34) des Werkzeugschafts (44) kreisförmig ausgebildet ist und der Code (52) auf der Stirnseite (34) des Werkzeugschafts (44) eine rechteckförmige Fläche (36)einnimmt.

9. System nach einem der vorangegangenen Ansprüche, **dadurch gekennzeichnet, dass** der Code (36) ein monochromer Code, insbesondere ein Data Matrix Code ist.

10. System nach einem der vorangegangenen Ansprüche, **dadurch gekennzeichnet, dass** der Code (36) zentriert auf der Stirnseite (34) des Werkzeugschafts (22) angebracht ist.

11. System nach einem der vorangegangenen Ansprüche, **dadurch gekennzeichnet, dass** zwischen dem kreisförmigen Rand der Stirnseite (34) des Werkzeugschafts (22) und den Außenecken der rechteckfömigen Fläche, welche der Code (36) auf der Stirnseite (34) des Werkzeugschafts (22) einnimmt, in radialer Richtung in Bezug auf Rotationsachse (20) des Werkzeugschafts (22) zu allen Seiten ein gleichmäßiger Abstand besteht, der mehr als 3% des Radius der Stirnseite (34) des Werkzeugschafts (22), insbesondere mindestens 5%, beträgt.

12. System nach einem der vorangegangenen Ansprüche, **dadurch gekennzeichnet, dass** die den rechteckförmigen Code (36) umgebenden freibleibenden Flächenabschnitte auf der Stirnseite (34) des Werkzeugschafts (22) unbenutzt bleiben hinsichtlich der Aufbringung weiterer Codes bzw. Informationen.

13. System nach einem der vorangegangenen Ansprüche, **dadurch gekennzeichnet, dass** der Code (36) durch eine Bearbeitung mit einem Laserwerkzeug auf der Stirnseite (34) des Werkzeugschafts (22), insbesondere durch Lasergravur, aufgebracht ist.

14. System nach einem der vorangegangenen Ansprüche, **dadurch gekennzeichnet, dass** in den Code (36) eine das Werkzeug (10) eindeutig identifizierende ID integriert ist.

15. System nach einem der vorangegangenen Ansprüche, **dadurch gekennzeichnet, dass** in den Code (36) eine die Charge des Werkzeugs (10) eindeutig identifizierende ID integriert ist.

16. System nach einem der vorangegangenen Ansprüche, **dadurch gekennzeichnet, dass** in den Code (36) eine den Typ des Werkzeugs (10), wie beispielsweise die Korngröße eines Fräsers, eindeutig identifizierende ID integriert ist.
